# EUROPEAN PATENT SPECIFICATION

(11) **EP 1 408 503 B1**
(45) Date of publication and mention of the grant of the patent: **26.06.2013**
(21) Application number: 03292355.9
(22) Date of filing: 26.09.2003
(51) Int. Cl.: G11B 20/10

(54) **Method for compensating an offset in an asymmetric reproduction signal**
Verfahren zur Offset-Kompensation in einem asymmetrischen Wiedergabesignal
Méthode pour compenser un décalage dans un signal de reproduction asymétrique

(30) Priority: 08.10.2002 EP 02022559
(43) Date of publication of application: 14.04.2004
(73) Proprietor: Thomson Licensing, 92130 Issy-les-Moulineaux (FR)
(72) Inventor: Rapp, Stefan, 78713 Schramberg (DE)
(74) Representative: Thies, Stephan

(56) References cited:
- WO-A-96/18189
- US-A- 5 508 993
- US-A- 5 790 335
- US-A- 5 901 128
- US-A1- 2002 060 596
- US-B1- 6 324 144
- DERRAS B: "Decision-directed adaptive nonlinear canceller for optical read channels" IEEE TRANSACTIONS ON CONSUMER ELECTRONICS, IEEE INC. NEW YORK, US, vol. 47, no. 3, August 2001 (2001-08), pages 520-527, XP002186350 ISSN: 0098-3063

## Description

The present invention relates to a method for compensating asymmetry in a reproduction signal from an optical recording medium. The invention further relates to an apparatus for reading from and/or writing to optical recording media using such method.

For high data storage densities on optical recording media, the modulation transfer function drops very steeply. The high frequency components of the analog reproduction signal are, therefore, attenuated considerably compared to the low frequency components. In case of a blu-ray disk (BD), which is currently under development, with a storage capacity of about 25 gigabytes, the shortest run-length components (2T) are attenuated by a factor of more than 20dB compared to the longest run-length components (8T). This results in a large amount of inter-symbol interference. The eye-pattern, i.e. the high frequency signal obtained by summing the output signals of a photodetector array used in an apparatus for reading from and/or writing to optical recording media ("reproduction signal") is even without noise nearly closed. Furthermore, the reproduction signal is also non-linear, which results in a strong asymmetry of the eye-pattern. This can, inter alia, be caused by non-optimum recording conditions like an excessive write power, leading to different lengths of marks and spaces on the optical recording medium. The amount of this asymmetry can be larger than the amplitude of the shortest run length signal.

For a reliable data detection, the mid-level signal, which is necessary for further processing of the reproduction signal, has to be placed exactly in the middle of the shortest run-length component of the reproduction signal. This can be achieved by subtracting an offset compensation signal, which is generated by an offset compensator, from the reproduction signal.

Such a solution is, for example, disclosed in the United States patent 6,324,144. The document shows an apparatus for correcting asymmetry existing in a reproduction signal by processing the reproduction signal in digital form. An analog-to-digital converter converts the analog reproduction signal to a digital reproduction signal. A predetermined asymmetry compensation signal is then added to the digital signal to obtain an asymmetry compensated signal. Finally, a binary non-return-to-zero-inverted (NRZI) data signal is detected from the asymmetry compensated signal. This binary data signal is output by the apparatus. For determining the asymmetry compensation signal, the zero crossing points of the digital reproduction signal are detected. The zero crossing points are needed for controlling a sign bit counting operation, which is used for controlling an asymmetry corrector.

The solution disclosed in the document, which has been developed for DVD-RAM where the shortest run-length is 3T, has the disadvantage that the detection of zero crossing points cannot be reliably performed if the amplitude of the shortest run-length components is smaller than the asymmetry of the reproduction signal. In this case the shortest run-length components are nearly vanishing in the noise floor and the zero crossing points cannot easily be detected.

Document XP002186350 DERRAS B: "Decision-directed adaptive nonlinear canceller for optical read channels", IEEE TRANSACTIONS ON CONSUMER ELECTRONICS, IEEE INC. NEW YORK, US. vol. 47, no. 3, August 2001 (2001-08), pages 520-527, ISSN: 0098-3063 discloses a method for asymmetry compensation in optical read channels. The method is based on an one-parameter non linear model, in which the estimation of the controlling parameter is performed via a gradient-based adaptive algorithm.

It is an object of the invention to propose a method for compensating an offset in an asymmetric reproduction signal capable of compensating the offset even if the amplitude of the shortest run-length components is smaller than the asymmetry of the reproduction signal, i.e. if the detection of zero crossing points is not possible for the shortest run-length components.

According to the invention, this object is achieved by a method for compensating an offset in a reproduction signal read from an optical recording medium, the offset being caused by the asymmetry of the reproduction signal, whereby a signal for compensating an offset is subtracted from the reproduction signal, the signal for compensating the offset being generated by an offset compensator.

The signal for compensating the offset is obtained by
detecting a binary data signal from the reproduction signal exhibiting asymmetry,
detecting shortest run-length components of the binary data signal
and updating the signal for compensating an offset only in response to the detection of shortest run-length components and wherein a sign bit of the reproduction signal is detected and in dependence of the sign bit, a positive value or a negative value is added to a previously generated signal for compensating an offset stored in a storage element.

Using the binary data signal, which only assumes two discrete values, for obtaining the offset compensation signal has the advantage that the offset compensation signal can be obtained with a much higher reliability compared with the digital reproduction signal, which assumes a plurality of discrete values. Even when a detection of zero crossing points is not possible, the offset compensation signal can still be obtained.

Moreover since the shortest run-length components are most affected by the asymmetry of the reproduction signal, it is sufficient to use only these components for obtaining the offset compensation signal. In this case, every time a shortest run-length component is detected, an enable signal is generated for enabling the offset compensation. Of course, it is also possible to detect signal components with another run-length and to generate the respective enable signal. A secure run-length detection based on the digital reproduction signal as known from prior art, i.e. before detecting the binary data signal, is not possible if the amplitude of the shortest run-length components is smaller than the asymmetry of the reproduction signal.

Advantageously, the method further comprises the step of delaying the asymmetric reproduction signal before obtaining the offset compensation signal and/or before subtracting the offset compensation signal from the reproduction signal. This allows to compensate for the processing delay caused by the detection of the binary data signal from the asymmetric reproduction signal and by the run-length detection, so that the enable signal, and correspondingly the asymmetry compensation signal, coincides exactly with the shortest run-length samples of the reproduction signal. Delaying the asymmetric reproduction signal can, for example, be performed by a register chain.

Favorably, the method further comprises the step of centering the asymmetric reproduction signal with regard to a digital zero before detecting the binary data signal. This centering is, for example, performed by passing the reproduction signal through a slicer. Centering the asymmetric reproduction signal without compensating the offset is sufficient for a reliable run-length detection until the offset compensation has settled to a final offset compensation signal.

Advantageously, a partial response maximum likelihood detector or a bit-by-bit detector is used for detecting the binary data signal. Both detectors deliver a non-return-to-zero (NRZ) data stream at their output, which can be used for obtaining the asymmetry compensation signal. While the partial response maximum likelihood detector, e.g. a partial response equalizer in combination with a Viterbi detector, delivers a lower bit error rate and has a higher performance, the bit-by-bit detector is less expensive and simplifies the necessary delay of the reproduction signal samples.

According to a further refinement of the invention a plurality of run-lengths of the binary data signal are detected for obtaining run-length dependent offset compensation signals and enabling the offset compensation accordingly. For each signal sample the offset compensation signal corresponding to the run-length of the signal sample is used for offset compensation. In this way, the offset is not only compensated for the shortest run length, but selectively also for other run-lengths, which are allowed by the channel modulation, leading to an even more reliable data detection and hence to a lower bit error rate. In this case, it is perfectly possible to use a partial response maximum likelihood detector for detecting the binary data signal used for obtaining the different offset compensation signals, and to use a simple bit-by-bit detector for controlling a multiplexer used for selecting the appropriate offset compensation signal.

According to another aspect of the invention an offset compensator for compensating an offset in a reproduction signal read from an optical recording medium, the offset being caused by the asymmetry of the reproduction signal, the offset compensator comprising a signal generator for generating a signal for compensation of an offset and a subtracter for subtracting the signal for compensation of an offset from the reproduction signal, characterized in that it further comprises:
a binary data signal detector for generating a binary data signal from the reproduction signal exhibiting asymmetry, a run-length detection circuit for detecting shortest run-length components to derive run-length information from the binary data signal, and
an offset compensation circuit for updating the signal for compensating an offset only in response to the detection of the shortest run-length components, a sign bit detector for detecting a sign bit of the reproduction signal, a storage element for storing a previously generated signal for compensating an offset, and an adder for adding in dependence of the detected sign bit a positive value or a negative value to the previously generated signal for compensating an offset.

Advantageously, the offset compensator further comprises delay means for delaying the asymmetric reproduction signal before obtaining the offset compensation signal and/or before subtracting the offset compensation signal from the reproduction signal. In this way possible delays caused by signal processing in the binary data signal detector and/or in the shortest run-length detector are taken into account, so that the enable signal, and correspondingly the asymmetry compensation signal, coincides exactly with the shortest run-length samples of the reproduction signal. A register chain can, for example, be used as a delay means. Of course, other delay means can also be used. In case another run-length is detected, corresponding delay means can also be advantageously provided.

Favorably, the offset compensator comprises means for centering the asymmetric reproduction signal with regard to the digital zero before generating the binary data signal. A possible centering means is a slicer, which even without compensating the offset centers the reproduction sufficiently for a reliable run-length detection until the offset compensation has settled to a final offset compensation signal.

According to one embodiement of the invention the offset compensator preferably uses a partial response maximum likelihood detector or a bit-by-bit detector for generating the binary data signal. While the partial response maximum likelihood detector, e.g. a partial response equalizer in combination with a Viterbi detector, delivers a lower bit error rate and has a higher performance, the bit-by-bit detector is less expensive and simplifies the necessary delay of the reproduction signal samples. Of course, other type of binary data signal detectors can also be used.

Favorably, a plurality of run-length detectors is used for detecting a plurality of run-length of the binary data signal for obtaining run-length dependent offset compensation signals and for enabling the offset compensation accordingly. In this way the offset can be compensated for any desired run-length, leading to an even more reliable data detection.

According to the invention, an apparatus for reading from and/or writing to recording media performs a method or comprises an offset compensator according to the invention. Such an apparatus has the advantage that it allows a more reliable data detection and hence a lower bit error rate upon reproduction of high-density optical recording media.

For a better understanding of the invention, exemplary embodiments are specified in the following description of advantageous configurations with reference to the figures. It is understood that the invention is not limited to these exemplary embodiments and that specified features can also expediently be combined and/or modified without departing from the scope of the present invention. In the figures:
- Fig. 1: shows an asymmetric eye-pattern with the different run-length components;
- Fig. 2: shows a block diagram of an offset compensator according to the invention;
- Fig. 3: shows a slicer for centering the digital reproduction signal with regard to a digital zero;
- Fig. 4: shows a run-length detection circuit for a run-length of 2T;
- Fig. 5: shows a circuit for obtaining an offset compensation signal;
- Fig. 6: shows a block diagram of a multiple run-length offset compensator; and
- Fig. 7: shows exemplary signals at different stages of offset compensation.

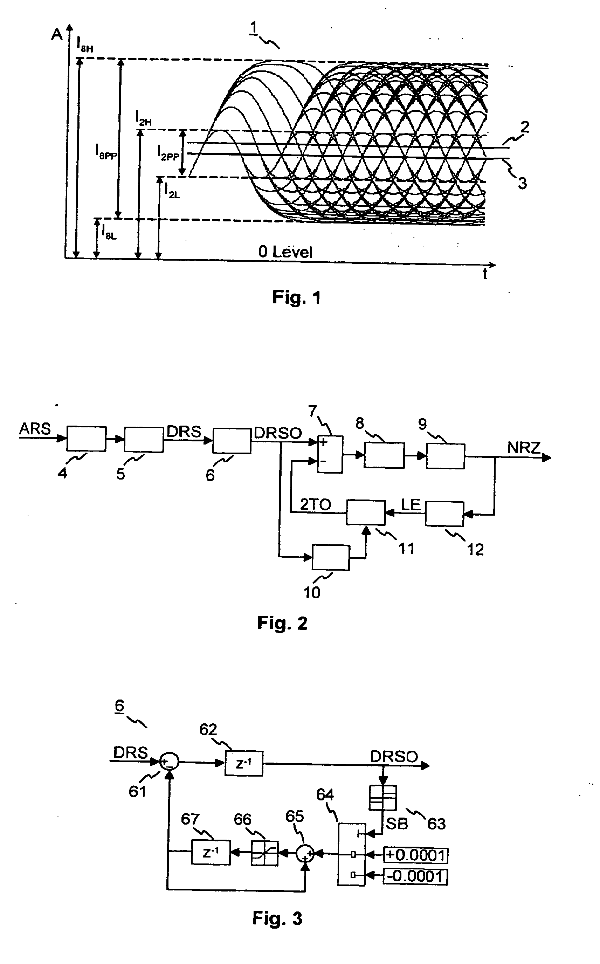

Fig. 1 shows an asymmetric eye-pattern 1 as obtained by reproducing data from an optical recording medium. Shown is the amplitude A of the signal against the time t. As can be seen from the figure, the peak to peak value I_{8PP} of the longest run length components, i.e. the difference between the highest level I_{8H} and the lowest level I_{8L}, is much larger than the corresponding peak to peak value I_{2PP} of the shortest run-length components, which is calculated accordingly from the highest level I_{2H} and the lowest level I_{2L} of the shortest run-length component. This difference is mainly caused by the steep drop of the modulation transfer function, i.e. the considerable attenuation of the high frequency components compared to the low frequency components. Furthermore, it can be seen from the figure that the mid-level 2 of longest run-length components differs noticeably from the mid-level 3 of the shortest run-length components. This asymmetry is caused by non-linearity of the reproduction signal. Since the eye-pattern 1 is nearly closed, this asymmetry is a severe limitation for a reliable data detection.

Fig. 2 shows a block diagram of an offset compensator according to the invention. The analog reproduction signal ARS is converted to the digital domain with an analog to digital converter (ADC) 4. Optional analog pre-equalization and/or low pass filtering in order to prevent aliasing is omitted in the figure for the sake of simplicity. Also not shown is the bit clock recovery phase locked loop (PLL) for clocking of the ADC and the digital logic. The converted reproduction signal is optionally passed through a digital pre-equalizer 5 for a moderate amplification of the high frequency components.

The digital reproduction signal DRS is passed through a slicer 6, which is shown in more detail in Fig. 3, where it is centered around the digital zero level. This is sufficient for a reliable run-length detection until the offset compensation circuit 11 has settled to a final 2T offset compensation signal 2TO.

The centered digital reproduction signal DRSO with the remaining offset is equalized to a so called partial response target by a partial response equalizer 8 and processed with a Viterbi detector 9. The Viterbi detector 9 delivers a non-return to zero data stream NRZ at its output. The combination of the partial response equalizer 8 and the Viterbi detector 9 constitutes a partial response maximum likelihood detector. Since such a detector not only analyses a single bit but a sequence of bits, it is capable of delivering a bit error rate which is sufficient for detecting the 2T offset compensation signal 2TO.

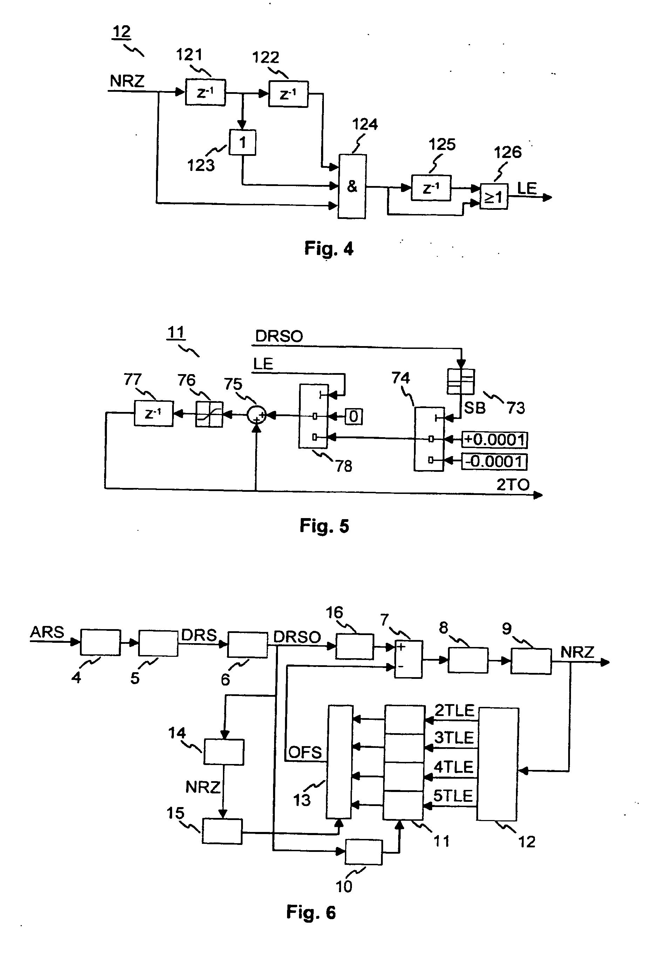

The NRZ data stream is passed to the shortest run-length detection circuit 12 shown in more detail in Fig. 4, which generates a loop enable signal LE for the compensation circuit 11. This signal LE is high whenever a 2T run-length component is detected. The digital reproduction signal DRSO coming from the slicer 6 is delayed with a register chain 10 in order to compensate for the processing delay of the partial response equalizer 8, the Viterbi detector 9 and the run-length detection circuit 12. In this way, the 2T components coincide exactly with the loop enable signal LE at the input of the offset compensation circuit 11. The offset compensation circuit 11 outputs an offset compensation signal 2TO, which is subtracted from the centered digital reproduction signal DRSO by a subtractor 7 and adjusted until the final zero level has been placed exactly in the middle of the shortest run-length amplitude.

In Fig. 3 a slicer 6 for centering the digital reproduction signal DRS with regard to a digital zero is shown. The digital reproduction signal DRS passes a delay 62 and is fed to a sign bit detector 63 for detecting the sign bit SB of the digital reproduction signal DRS. Depending on the sign bit SB, either a positive value (+0.0001) or a negative value (-0.0001) is output by a multiplexer 64. The output signal of the multiplexer passes a limiter 66 and a storage element 67. The output signal of the storage element 67 is on the one hand added to the output signal of the multiplexer 64 by an adder 65 and on the other hand subtracted from the digital reproduction signal DRS by a subtractor 61. The limiter 66 serves to keep the output signal of the storage element 67 within predetermined limits.

Fig. 4 shows a run-length detection circuit 12 for a run-length of 2T. Three signals are fed to an AND-gate 124. The first signal is the binary data stream NRZ. The second signal is the binary data stream NRZ passed through a first delay 121 and a NOT-gate 123. The third signal is the binary data stream NRZ passed through the first delay 121 and a second delay 122. The output of the AND-gate 124 is on the one hand fed to an OR-gate 126 and on the other hand fed to the OR-gate 126 through a third delay 125. The circuit 11, therefore, emits a "1" if a 2T component is found in the binary data stream NRZ. In this case the loop enable signal LE is active during two clock cycles. Otherwise the output signal is "0", i.e. the loop enable signal LE is passive.

For other run-lengths the detection circuits operate correspondingly.

In Fig. 5 a circuit 11 for obtaining an offset compensation signal 2TO for the shortest run-length component 2T is shown. The circuit 11 is largely similar to the slicer 6 shown in Fig. 3, i.e. it comprises a sign bit detector 73, a multiplexer 74, an adder 75, a limiter 76, and a storage element 77. However, the circuit 11 comprises an additional multiplexer 78, which is controlled by the loop enable signal LE emitted by the run-length detection circuit 12 shown in Fig. 4. If the loop enable signal LE is passive, the additional multiplexer 78 outputs a zero value. If the loop enable signal LE is active, the additional multiplexer 78 outputs the output signal of the multiplexer 74. Therefore, the offset compensation signal 2TO is only updated if a shortest run-length component 2T is detected.

Fig. 6 shows a block diagram of a multiple run-length offset compensator. The offset compensator corresponds largely to the offset compensator shown in Fig. 2. However, in this case the run-length detector 12 is capable of detecting run-lengths from 2T to 5T. In addition, a further delay element 16 is introduced between the slicer 6 and the subtractor 7. For each detected run-length component the detector 12 will send a corresponding loop enable signal 2TLE to 5TLE to the offset compensating circuit 11. This circuit 11 is capable of generating an offset compensation signal for each run-length component. A multiplexer 13 is used for selecting the appropriate offset compensation signal OFS for each signal sample. For this purpose, the centered digital reproduction signal DRSO is passed to a bit by bit detector 14, which delivers at its output a non-return to zero data stream NRZ. This data stream NRZ is fed to a further run-length detector 15, which controls the multiplexer 13. The further delay element 16 is necessary to compensate for the processing time needed for the run-length detection by the run-length detector 15. In this way, the offset is compensated not only for the shortest run-length but selectively also for other run-lengths, which are allowed by the channel modulation.

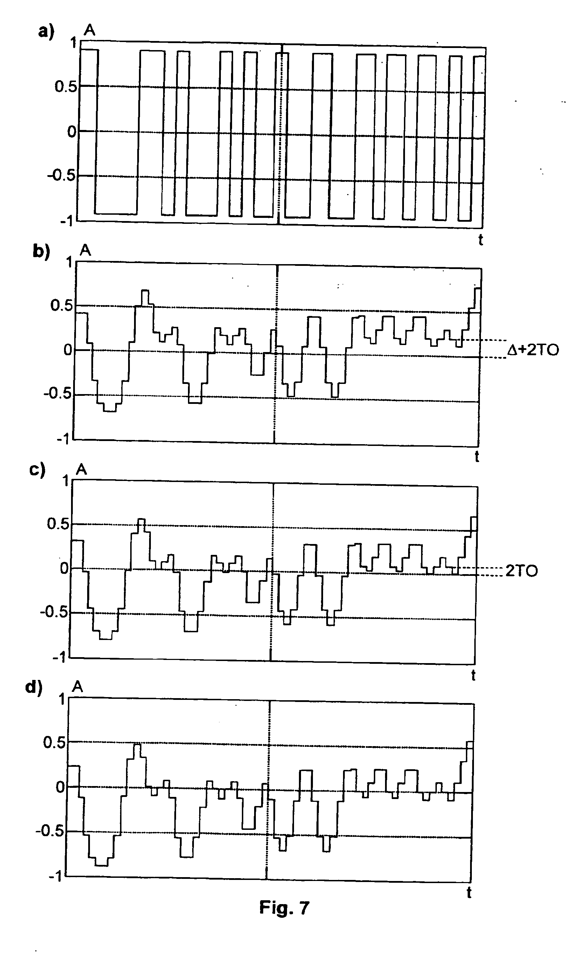

Fig. 7 shows exemplary signals at different stages of offset compensation. Shown is the amplitude A of the signals against the time t. All signals have been normalized to a maximum amplitude value of "1" for the sake of clarity. Fig. 7a shows the ideal reproduction signal, which corresponds to the marks and spaces on the optical recording medium. In Fig. 7b the digital reproduction signal DRS after the analog to digital converter 4, but before the slicer 6 is shown. The signal DRS is not centered with regard to the digital zero line. Instead, it has an offset Δ, which can be removed by the slicer 6, and a further offset 2TO caused by the asymmetry in the eye-pattern 1, which cannot be removed by the slicer 6. Fig. 7c shows the digital reproduction signal DRSO after the slicer 6. As can be seen in the figure, the offset Δ has been removed. However, the further offset 2TO caused by the asymmetry in the eye-pattern 1 is still present. In Fig. 7d, the digital reproduction signal after offset compensation is shown. The further offset 2TO has been removed by subtracting the offset compensation signal 2TO from the digital reproduction signal DRSO.

## Claims

1. Method for compensating an offset in a reproduction signal read from an optical recording medium, the offset being caused by the asymmetry of the reproduction signal, whereby a signal for compensating an offset (OFS) is subtracted from the reproduction signal (DRSO), the signal for compensating the offset being generated by an offset compensator, **characterized in that** it comprises the steps of:
detecting a binary data signal (NRZ) by a binary data signal detector (8, 9) from the reproduction signal exhibiting asymmetry (DRSO);
detecting shortest run-length components (LE) of the binary data signal (NRZ) with a run-length detection circuit (12); and
updating the signal for compensating an offset (OFS) with an offset compensation circuit (11) only in response to the detection of shortest run-length components (LE), wherein a sign bit of the reproduction signal is detected with a sign bit detector (73) and in dependence of the sign bit, a positive value or a negative value is added to a previously generated signal for compensating an offset (OFS) stored in a storage element (77).

2. Method according to claim 1, **further comprising** the step of centering the reproduction signal exhibiting asymmetry (DRSO) with regard to a digital zero line before detecting the binary data signal (NRZ).

3. Method according to anyone of claims 1-2, **wherein** a partial response maximum likelihood detector (8,9) or a bit-by-bit detector (9) is used for detecting the binary data signal (NRZ).

4. Method according to anyone of claims 1-3, **wherein** a plurality of run-lengths of the binary data signal (NRZ) are detected for obtaining run-length dependent signals for compensating the offset (OFS) and for enabling the offset compensation accordingly.

5. Offset compensator for compensating an offset in a reproduction signal read from an optical recording medium, the offset being caused by the asymmetry of the reproduction signal, the offset compensator comprising a signal generator (11) for generating a signal for compensation of an offset (OFS), and a subtractor (7) for subtracting the signal for compensation of an offset (OFS) from the reproduction signal (DRSO), **characterized in that** it further comprises:
a binary data signal detector (8,9) for generating a binary data signal (NRZ) from the reproduction signal exhibiting asymmetry (DRSO),
a run-length detection circuit (12) for detecting shortest run-length components (LE) to derive run-length information from the binary data signal (NRZ), and
an offset compensation circuit (11) for updating the signal for compensating an offset (OFS) only in response to the detection of the shortest run-length components (LE), a sign bit detector (73) for detecting a sign bit of the reproduction signal, a storage element (77) for storing a previously generated signal for compensating an offset, and
an adder (75) for adding in dependence of the detected sign bit a positive value or a negative value to the previously generated signal for compensating an offset (OFS).

6. Offset compensator according to claim 5, **further comprising** means (6) for centering the reproduction signal exhibiting asymmetry (DRSO) with regard to a digital zero line before generating the binary data signal (NRZ).

7. Offset compensator according to anyone of claims 5-6, **further comprising** a partial response maximum likelihood detector (8,9) or a bit-by-bit detector (9) for generating the binary data signal NRZ.

8. Offset compensator according to anyone of claims 5-7, **further comprising** a plurality of run-length detectors (12) for detecting a plurality of run-lengths of the binary data signal (NRZ) for obtaining run-length dependent signals for compensation of the offset (OFS) and for enabling the offset compensation accordingly.

9. Apparatus for reading from and/or writing to optical recording media, **characterized in that** it performs a method according to any of claims 1-4 or comprises an offset compensator according to any of claims 5-8.

## Patentansprüche

1. Verfahren zum Kompensieren eines Offsets in einem Wiedergabesignal, das von einem optischen Aufzeichnungsmedium gelesen wird, wobei der Offset durch die Asymmetrie des Wiedergabesignals verursacht ist, wobei ein Signal zum Kompensieren eines Offsets (OFS) von dem Wiedergabesignal (DRSO) subtrahiert wird, wobei das Signal zum Kompensieren des Offsets durch einen Offset-Kompensator erzeugt wird, **dadurch gekennzeichnet, dass** das Verfahren die folgenden Schritte umfasst:
Erfassen eines binären Datensignals (NRZ) durch einen Detektor (8, 9) für binäre Datensignale aus dem Wiedergabesignal (DRSO), das eine Asymmetrie zeigt;
Erfassen der Komponenten (LE) mit der kürzesten Lauflänge des binären Datensignals (NRZ) mit einer Lauflängenerfassungsschaltung (12); und
Aktualisieren des Signals zum Kompensieren eines Offsets (OFS) mit einer Offset-Kompensationsschaltung (11) nur in Reaktion auf die Erfassung von Komponenten (LE) mit der kürzesten Lauflänge, wobei mit einem Vorzeichenbitdetektor (73) ein Vorzeichenbit des Wiedergabesignals erfasst wird und in Abhängigkeit von dem Vorzeichenbit ein positiver Wert oder ein negativer Wert zu einem zuvor erzeugten Signal addiert wird, um einen in einem Speicherelement (77) gespeicherten Offset (OFS) zu kompensieren.

2. Verfahren nach Anspruch 1, **ferner umfassend** den Schritt des Zentrierens des Wiedergabesignals (DRSO), das eine Asymmetrie zeigt, hinsichtlich einer digitalen Nulllinie vor dem Erfassen des binären Datensignals (NRZ).

3. Verfahren nach einem der Ansprüche 1-2, **bei dem** zum Erfassen des binären Datensignals (NRZ) ein Detektor (8, 9) der maximalen Wahrscheinlichkeit bei der Teilantwort oder ein Bit-für-Bit-Detektor (9) verwendet wird.

4. Verfahren nach einem der Ansprüche 1-3, **bei dem** mehrere Lauflängen des binären Datensignals (NRZ) erfasst werden, um lauflängenabhängige Signale zu erhalten, um den Offset (OFS) zu kompensieren und um dementsprechend die Offset-Kompensation zu ermöglichen.

5. Offset-Kompensator zum Kompensieren eines Offsets in einem Wiedergabesignal, das von einem optischen Aufzeichnungsmedium gelesen wird, wobei der Offset durch die Asymmetrie des Wiedergabesignals verursacht ist, wobei der Offset-Kompensator einen Signalgenerator (11) zum Erzeugen eines Signals für die Kompensation eines Offsets (OFS) und einen Subtrahierer (7) zum Subtrahieren des Signals für die Kompensation eines Offsets (OFS) von dem Wiedergabesignal (DRSO) umfasst, **dadurch gekennzeichnet, dass** der Offset-Kompensator ferner umfasst:
einen Detektor (8, 9) für binäre Datensignale zum Erzeugen eines binären Datensignals (NRZ) aus dem Wiedergabesignal (DRSO), das eine Asymmetrie zeigt,
eine Lauflängen-Erfassungsschaltung (12) zum Erfassen der Komponenten (LE) mit der kürzesten Lauflänge zum Ableiten von Lauflängeninformationen aus dem binären Datensignal (NRZ), und
eine Offset-Kompensationsschaltung (11) zum Aktualisieren des Signals zum Kompensieren eines Offsets (OFS) nur in Reaktion auf die Erfassung der Komponenten (LE) mit der kürzesten Lauflänge, einen Vorzeichenbitdetektor (73) zum Erfassen eines Vorzeichenbits des Wiedergabesignals, ein Speicherelement (77) zum Speichern eines zuvor erzeugten Signals zum Kompensieren eines Offsets und einen Addierer (75) zum Addieren eines positiven Werts oder eines negativen Werts zu einem zuvor erzeugten Signal in Abhängigkeit von dem erfassten Vorzeichenbit, um einen Offset (OFS) zu kompensieren.

6. Offset-Kompensator nach Anspruch 5, **ferner umfassend** ein Mittel (6) zum Zentrieren des Wiedergabesignals (DRSO), das eine Asymmetrie zeigt, hinsichtlich einer digitalen Nulllinie vor dem Erzeugen des binären Datensignals (NRZ).

7. Offset-Kompensator nach einem der Ansprüche 5-6, **ferner umfassend** einen Detektor (8, 9) der maximalen Wahrscheinlichkeit bei der Teilantwort oder einen Bit-für-Bit-Detektor (9) zum Erzeugen des binären Datensignals (NRZ).

8. Offset-Kompensator nach einem der Ansprüche 5-7, **ferner umfassend** mehrere Lauflängendetektoren (12) zum Detektieren mehrerer Lauflängen des binären Datensignals (NRZ), um lauflängenabhängige Signale für die Kompensation des Offsets (OFS) zu erhalten und um dementsprechend die Offset-Kompensation zu ermöglichen.

9. Vorrichtung zum Lesen von optischen Aufzeichnungsmedien und/oder zum Schreiben auf optische Aufzeichnungsmedien, **dadurch gekennzeichnet, dass** die Vorrichtung ein Verfahren nach einem der Ansprüche 1-4 ausführt oder einen Offset-Kompensator nach einem der Ansprüche 5-8 umfasst.

## Revendications

1. Procédé pour compenser un décalage dans un signal de reproduction lu à partir d'un support d'enregistrement optique, le décalage étant causé par l'asymétrie du signal de reproduction, dans lequel un signal de compensation d'un décalage (OFS) est soustrait du signal de reproduction (DRSO), le signal de compensation du décalage étant généré par un compensateur de décalage, **caractérisé en ce qu'il** comprend les étapes suivantes :
détection d'un signal de données binaires (NRZ) par un détecteur de signaux de données binaires (8, 9) à l'aide du signal de reproduction présentant une asymétrie (DRSO) ;
détection des composants de longueur de course les plus courts (LE) du signal de données binaires (NRZ) à l'aide d'un circuit de détection de longueur de course (12) ; et
mise à jour du signal de compensation d'un décalage (OFS) à l'aide d'un circuit de compensation de décalages (11) uniquement en réponse à la détection des composants de longueur de course les plus courts (LE), où un bit de signe du signal de reproduction est détecté à l'aide d'un détecteur de bits de signes (73) et en fonction du bit de signe, une valeur positive ou une valeur négative est ajoutée à un signal précédemment généré afin de compenser un décalage (OFS) stocké dans un élément de stockage (77).

2. Procédé selon la revendication 1, **comprenant en outre** l'étape de centrer le signal de reproduction présentant une asymétrie (DRSO) par rapport à une ligne zéro numérique avant la détection d'un signal de données binaires (NRZ).

3. Procédé selon l'une quelconque des revendications 1 ou 2, **dans lequel** un détecteur de probabilité maximum de réponse partielle (8, 9) ou un détecteur bit par bit (9) est utilisé pour détecter le signal de données binaires (NRZ).

4. Procédé selon l'une quelconque des revendications 1 à 3, **dans lequel** une pluralité de longueurs de course de signal de données binaires (NRZ) sont détectées pour l'obtention de signaux dépendants des longueurs de course pour compenser le décalage (OFS) et pour permettre la compensation adaptée du décalage.

5. Compensateur de décalage afin de compenser un décalage dans un signal de reproduction lu à partir d'un support d'enregistrement optique, le décalage étant causé par l'asymétrie du signal de reproduction, le compensateur de décalage comprenant un générateur de signal (11) pour la génération d'un signal de compensation d'un décalage (OFS) et un soustracteur (7) afin de soustraire le signal de compensation d'un décalage (OFS) du signal de reproduction (DRSO), **caractérisé en ce qu'il** comprend en outre :
un détecteur de signal de données binaires (8,9) pour la génération d'un signal de données binaires (NRZ) à partir du signal de reproduction présentant une asymétrie (DRSO) ;
un circuit de détection de longueurs de course (12) pour la détection des composants de longueur de course les plus courts (LE) afin de dériver les informations de longueur de course en provenance du signal de données binaires (NRZ), et
un circuit de compensation de décalage (11) pour la mise à jour du signal de compensation d'un décalage (OFS) seulement en réponse à la détection des composants de longueur de course les plus courts (LE), un détecteur de bits de signes (73) pour la détection d'un bit de signe du signal de reproduction, un élément de stockage (77) pour le stockage d'un signal précédemment généré de compensation d'un décalage, et un additionneur (75) pour l'ajout , en fonction du signe de bit détecté, une valeur positive ou une valeur négative au signal précédemment généré pour la compensation d'un décalage (OFS).

6. Compensateur de décalage selon la revendication 5, **comprenant en outre** un moyen (6) de centrer le signal de reproduction présentant une asymétrie (DRSO) par rapport à une ligne zéro numérique avant la génération d'un signal de données binaires (NRZ).

7. Compensateur de décalage selon l'une quelconque des revendication 5 ou 6, **comprenant en outre** un détecteur de probabilité maximum de réponse partielle (8, 9) ou un détecteur bit par bit (9) pour la génération du signal de données binaires NRZ.

8. Compensateur de décalage selon l'une quelconque des revendications 5 à 7, **comprenant en outre** une pluralité de détecteurs de longueurs de course (12) pour la détection d'une pluralité de signaux de données binaires (NRZ) pour l'obtention de signaux en fonction des longueurs pour compenser le décalage (OFS) et pour permettre la compensation adaptée du décalage.

9. Appareil de lecture à partir de et/ou d'écriture sur des supports d'enregistrement optique, **caractérisé en ce qu'il** effectue un procédé selon l'une quelconque des revendications 1 à 4 ou comprend un compensateur de décalage selon l'une quelconque des revendications 5 à 8.
